# EUROPÄISCHE PATENTSCHRIFT

(11) **EP 3 924 646 B1**
(45) Veröffentlichungstag und Bekanntmachung des Hinweises auf die Patenterteilung: **16.10.2024**
(21) Anmeldenummer: 20702738.4
(22) Anmeldetag: 27.01.2020
(51) Int. Cl.: F16H 57/04, H02K 9/06

(54) **ANTRIEBSSYSTEM, AUFWEISEND EINEN ELEKTROMOTOR, EIN GETRIEBE UND EINEN EINEN LÜFTER AUFWEISENDEN ADAPTER**
DRIVE SYSTEM, COMPRISING AN ELECTRIC MOTOR, A TRANSMISSION AND AN ADAPTER HAVING A FAN
SYSTÈME D'ENTRAÎNEMENT COMPRENANT UN MOTEUR ÉLECTRIQUE, UNE TRANSMISSION ET UN ADAPTATEUR COMPRENANT UN VENTILATEUR

(30) Priorität: 12.02.2019 DE 102019000981
(43) Veröffentlichungstag der Anmeldung: 22.12.2021
(73) Patentinhaber: SEW-EURODRIVE GmbH & Co. KG, 76646 Bruchsal (DE)
(72) Erfinder: SZTUBA, Michael, 51145 Köln (DE); BECKER, Renaud, 67630 Niederlauterbach (FR); LÖFFEL, Martin, 76327 Pfinztal (DE)
(86) Internationale Anmeldenummer: PCT/EP2020/025032
(87) Internationale Veröffentlichungsnummer: WO 2020/164795

(56) Entgegenhaltungen:
- EP-A1- 1 357 337
- EP-B1- 1 357 337
- WO-A1-2009/037174
- WO-A1-2017/216754
- DE-A1- 102005 031 197
- DE-A1- 102008 010 912
- DE-A1- 102012 025 597
- DE-A1- 102013 005 430
- US-A1- 2014 023 516
- US-A1- 2016 102 676

## Beschreibung

Die Erfindung betrifft ein Antriebssystem, aufweisend einen Elektromotor, ein Getriebe und einen einen Lüfter aufweisenden Adapter.

Es ist allgemein bekannt, dass ein Elektromotor ein Getriebe antreibbar macht.

Aus der WO 2017 / 216 754 A1 **ist ein** Getriebemotor bekannt.

Aus der DE 10 2013 005 430 A1 ist ein Getriebe mit einer Welle bekannt.

Aus der DE 20 2005 003 689 U1 ist eine Anordnung mit einem elektronisch kommutierten Außenläufermotor bekannt.

Aus der DE 10 2008 010 912 A1 ist ein Lüfterrad bekannt.

Aus der DE 10 2008 017 643 A1 ist ein Adapter für einen Getriebemotor bekannt.

Aus der US 2016 / 0 312 877 A1 ist ein Getriebe mit Lüfterhaube bekannt.

**Aus der** DE 10 2013 005 430 A1 **ist als nächstliegender Stand der Technik ein Getriebe mit Welle bekannt.**

**Aus der** WO 2017 / 216 754 A1 **ist ein Getriebemotor bekannt.**

**Aus der** DE 10 2008 010 912 A1 **ist ein Lüfterrad bekannt.**

**Aus der** US 2014/023516 A1 **ist ein Diagonallüfter bekannt.**

**Aus der** WO 2009 / 037174 A1 **ist eine Reduktionseinheit mit Lüfter bekannt.**

**Aus der** DE 10 2005 031197 A1 **ist ein Antrieb mit Lüfter bekannt.**

**Aus der** EP 1 357 337 A1 **ist ein Lüfterschutz bekannt.**

**Aus der** US 2016/102676 A1 **ist das Kühlen eines Motors mit einem Lüfter bekannt.**

Der Erfindung liegt daher die Aufgabe zugrunde, ein Antriebssystem kompakt ausführbar zu machen.

Erfindungsgemäß wird die Aufgabe bei der nach den in Anspruch 1 angegebenen Merkmalen gelöst.

Wichtige Merkmale der Erfindung bei dem Antriebssystem sind, dass das Antriebssystem einen Elektromotor, ein Getriebe und einen einen Lüfter aufweisenden Adapter aufweist,
wobei eine Rotorwelle des Elektromotors mit einer im Adapter angeordneten Kupplung verbunden ist, insbesondere eingesteckt ist,
wobei die Kupplung mit einer eintreibenden Welle des Getriebes verbunden ist, insbesondere eingesteckt ist,
wobei ein Lüfter mit der Kupplung drehfest verbunden ist, insbesondere auf die Kupplung aufgesteckt ist,
wobei das Adaptergehäuseteil einen in axialer Richtung vom Elektromotor abgewandten, als Düsenbereich derartig geformten Endbereich aufweist, dass der vom Lüfter geförderte Luftstrom in axialer Richtung, insbesondere entlang eines Gehäusebereichs des Getriebes, aus dem Adaptergehäuseteil ausströmt,
insbesondere wobei die axiale Richtung parallel zur Richtung der Drehachse der Kupplung ausgerichtet ist.

Von Vorteil ist dabei, dass der Adapter nicht nur Kupplungsfunktion ausführt, sondern auch Kühlfunktion. Dabei ist die Kühlfunktion nicht nur auf den Motor, sondern auch auf das Getriebe ausgerichtet. Denn hierzu wird vom Adapter-integrierten Lüfter Luft angesaugt, die am Lagerflansch des Elektromotors vorbeiströmt und somit von dieser Wärme abführt. Außerdem ist der Lagerflansch mit dem Adaptergehäuseteil verbunden, so dass auch dieses über seine Kühlrippen an den austretenden Luftstrom Wärme abführt. Darüber hinaus fungiert das Adaptergehäuseteil als Düse, welche den austretenden Luftstrom in eine Richtung lenkt, die parallel zum Getriebegehäuseteil ausgerichtet ist. Somit wird auch Wärme des Getriebes mittels des Luftstroms an die Umgebung abgeführt. Vorteiligerweise überragt das Adaptergehäuseteil den Gehäusebereich des Getriebes hierzu radial und axial.

Infolge der verbesserten Entwärmung ist das Antriebssystem kompakt ausführbar.

Bei einer vorteilhaften Ausgestaltung ist die Kupplung mittels eines im Adaptergehäuseteil aufgenommenen Lagers drehbar gelagert. Von Vorteil ist dabei, dass eine Lagerung im Adapter angeordnet ist, welche auch vom Getriebe mitnutzbar ist. Hierzu ist die eintreibende Welle des Getriebes über nur zwei Lager lagerbar, von denen das erste im Getriebe angeordnet ist und das zweite das im Adaptergehäuseteil aufgenommene Lager ist.

Bei einer vorteilhaften Ausgestaltung ist der Lüfter als Diagonallüfter ausgeführt. Von Vorteil ist dabei, dass die Umlenkung des von den als Radiallüfterflügel ausgeführten Lüfterflügeln geförderten Luftstroms in die axiale Richtung nicht nur vom Adaptergehäuseteil, sondern auch schon von dem Lüfter selbst zumindest teilweise ausgeführt wird.

Bei einer vorteilhaften Ausgestaltung weist der Lüfter einen Basisring auf, welcher mittels, in Umfangsrichtung voneinander insbesondere regelmäßig beabstandeten Lüfterflügeln mit einem radial vom Basisring beabstandeten Luftleitring verbunden ist. Von Vorteil ist dabei, dass der Lüfter als Radiallüfter ausgeführt wäre, wenn der Luftleitring fehlen würde, welcher den radial geförderten Luftstrom in diagonale Richtung umlenkt und welcher außerdem die Stabilität des Lüfters verbessert.

Bei einer vorteilhaften Ausgestaltung erstrecken die Lüfterflügel sich jeweils radial, insbesondere wobei der vom jeweiligen Lüfterflügel in Umfangsrichtung überdeckte Bereich unabhängig vom Radialabstand ist. Von Vorteil ist dabei, dass die Lüfterflügel nach Art der Lüfterflügel eines Radiallüfters ausgeführt sind.

Bei einer vorteilhaften Ausgestaltung nimmt der minimale Radialabstand des Luftleitrings in axialer Richtung monoton zu. Von Vorteil ist dabei, dass der Luftleitring den radial geförderten Luftstrom in diagonale Richtung umlenkt.

**Erfindungsgemäß** weist das Adaptergehäuseteil eine innere ringartige Struktur und eine äußere ringartige Struktur auf,
wobei die innere ringartige Struktur mit der äußeren ringartigen Struktur über erste und zweite Kühlrippen verbunden sind, welche in Umfangsrichtung voneinander insbesondere regelmäßig beabstandet sind,
wobei die äußere ringartige Struktur einen Düsenbereich aufweist, insbesondere wobei die innere ringartige Struktur radial innerhalb der äußeren ringartigen Struktur angeordnet ist. Von Vorteil ist dabei, dass die Stabilität hoch ist, wenig Material notwendig ist und außerdem Wärme an den geförderten Luftstrom abgebbar ist.

Bei einer vorteilhaften Ausgestaltung nimmt die innere ringartige Struktur ein Lager auf, welches die Kupplung drehbar lagert,

insbesondere wobei die innere ringartige Struktur ein Wellendichtring aufnimmt, dessen Dichtlippe auf der Kupplung läuft. Von Vorteil ist dabei, dass die Kupplung im Adapter lagerbar ist und das Öl aus dem Getriebeinnenraum bis zum Wellendichtring bewegen darf.

**Erfindungsgemäß** weisen die ersten Kühlrippen jeweils in Umfangsrichtung eine geringere Wandstärke auf als die zweiten Kühlrippen,
wobei in Umfangsrichtung zwischen zwei jeweils zueinander nächstbenachbarten zweiten Kühlrippen erste Kühlrippen angeordnet sind. Von Vorteil ist dabei, dass die zweiten Kühlrippen im Wesentlichen Tragfunktion ausführen.

Bei einer vorteilhaften Ausgestaltung überragt das Adaptergehäuseteil, insbesondere der Düsenbereich des Adaptergehäuseteils, den Gehäusebereich des Getriebes,
wobei die Oberfläche des Gehäusebereichs eine Zylindermantelfläche ist. Von Vorteil ist dabei, dass die ausströmende geförderte Luft entlang dem Getriebegehäuse ausströmt und somit sehr gut entwärmt.

Bei einer vorteilhaften Ausgestaltung überlappt der vom Adaptergehäuseteil, insbesondere Düsenbereich des Adaptergehäuseteils, in axialer Richtung überdeckte Bereich mit dem vom Gehäusebereich in axialer Richtung überdeckten Bereich. Von Vorteil ist dabei, dass der austretende Luftstrom entlang des Getriebegehäuses strömt.

Bei einer vorteilhaften Ausgestaltung umgibt der Gehäusebereich eine oder zumindest zwei Planetengetriebestufen des Getriebes radial. Von Vorteil ist dabei, dass der Gehäusebereich zylindrisch ist, insbesondere im Gegensatz zum Parallelwellengetriebe.

Bei einer vorteilhaften Ausgestaltung überlappt der vom Adaptergehäuseteil überdeckte Radialabstandsbereich mit dem vom Gehäusebereich überdeckten Radialabstandsbereich,
insbesondere der vom Düsenbereich des Adaptergehäuseteils überdeckte Radialabstandsbereich radial beabstandet ist, insbesondere radial außerhalb ist, von dem vom Gehäusebereich überdeckten Radialabstandsbereich. Von Vorteil ist dabei, dass der Luftstrom radial außerhalb aus dem Düsenbereich ausströmt, insbesondere entlang des Getriebegehäuses.

**Erfindungsgemäß** weist die äußere ringartige Struktur radial durchgehende Ausnehmungen als Lufteinlassöffnungen für den vom Lüfter geförderten Luftstrom auf. Von Vorteil ist dabei, dass der Adapter eine geringe Masse aufweist und eine verbesserte Kühlung erreichbar ist.

Bei einer vorteilhaften Ausgestaltung nimmt die axiale Breite des jeweiligen Lüfterflügels mit zunehmendem Radialabstand monoton zu, insbesondere eine stufenartige Zunahme aufweist. Von Vorteil ist dabei, dass in einem radial inneren Beriech ein axiales Einströmen der Luft erreichbar ist und die vom jeweiligen Lüfterflügel radial geförderte Luft nicht in axialer Richtung entweichen kann sondern vom Lüfterflügel weitergefördert wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:

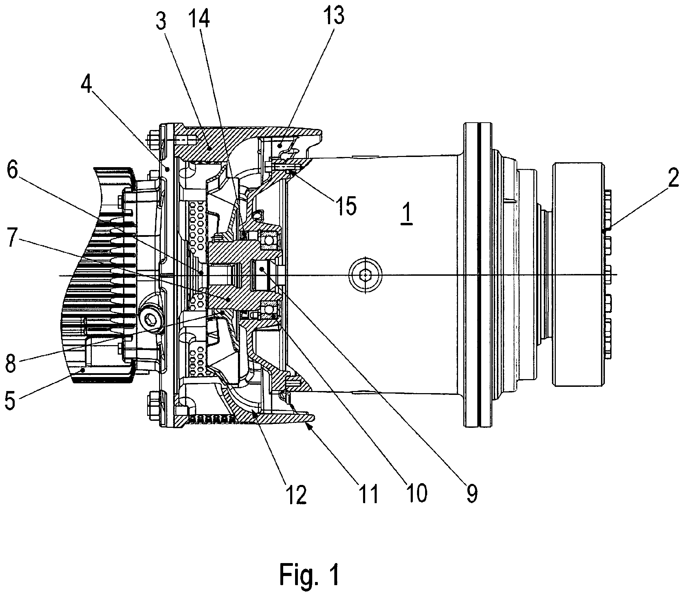

In der Figur 1 ist ein erfindungsgemäßes Antriebssystem dargestellt, das ein von einem Elektromotor über einen einen Lüfter aufweisenden Adapter angetriebenes Getriebe aufweist und im Bereich des Adapters angeschnitten dargestellt ist.
In der Figur 2 ist der Adapter angeschnitten in Schrägansicht aus einer ersten Blickrichtung hergezeigt.
In der Figur 3 ist der Adapter angeschnitten in Schrägansicht aus einer zweiten Blickrichtung hergezeigt.
In der Figur 4 ist das Antriebssystem in Schrägansicht dargestellt.
In der Figur 5 ist der Lüfter 8 in Schrägansicht dargestellt.
In der Figur 6 ist der Lüfter 8 im Querschnitt dargestellt.

Wie in den Figuren dargestellt, weist das Antriebssystem ein Getriebe auf, das vorzugsweise als Planetengetriebe ausgeführt ist.

Dabei sind zumindest zwei Planetengetriebestufen von einem zylindrischen Gehäusebereich 1 radial umgeben.

Der Elektromotor weist ein Statorgehäuse 5 auf, welches mit einem Lagerflansch 4 verbunden ist, welcher ein Lager zur drehbaren Lagerung einer Rotorwelle 6 des Elektromotors aufweist.

Die Rotorwelle 6 ist in eine Ausnehmung einer Kupplung 7 eingesteckt, insbesondere eingepresst, so dass die Rotorwelle 6 mit der Kupplung 7 drehfest verbunden ist.

In die Kupplung 7 ist auch die eintreibende Welle 9 des Getriebes eingesteckt, insbesondere eingepresst. Vorzugsweise ist die Welle 9 mit einem Sonnenrad einer Planetengetriebestufe des Getriebes drehfest verbunden.

Die eintreibende Welle 9 und die Rotorwelle 6 sind voneinander axial beabstandet, insbesondere wobei Material der Kupplung 7 zwischen den beiden Wellen (7, 9) angeordnet ist.

Der Adapter weist ein Adaptergehäuseteil 3 auf, welches die Kupplung gehäusebildend umgibt. Die Kupplung 7 ist mittels eines Lagers 10 drehbar gelagert, wobei das Lager 10 im Adaptergehäuseteil 3 aufgenommen ist.

Zwischen dem Adaptergehäuseteil 3 und der Kupplung 7 ist ein Wellendichtring 14 angeordnet, so dass die Kupplung 7 zum Adaptergehäuseteil 3 hin abgedichtet ist.

Ein Lüfter 8 ist drehfest verbunden mit der Kupplung 7.

Der Lüfter ist als Diagonallüfter ausgeführt, der einem Radiallüfter ähnlich den geförderten Luftstrom nach radial außen fördert. Dieser Luftstrom wird von einem vorzugsweise mit einem Radius ausgeführten, am Adaptergehäuseteil 3 ausgeformten Umlenkbereich in axiale Richtung umgelenkt.

Dabei bildet das Adapterteil 3 einen Kanal, in welchem erste und zweite Kühlrippen (13, 20) des Adaptergehäuseteils 3 angeordnet sind, so dass der Luftstrom axial aus dem Adaptergehäuseteil 3 austritt und entlang des Gehäusebereichs 1 des Getriebes strömt.

Hierzu ist der Auslass für den Luftstrom düsenartig ausgeführt. Auf diese Weise ist eine hohe Ausströmgeschwindigkeit in axialer Richtung erreichbar.

Das Adaptergehäuseteil 3 ist einstückig ausgeführt und weist außerdem Ausnehmungen 21 als Lufteinlass auf. Diese Ausnehmungen 21 sind auf der axial vom Auslass abgewandten Seite des Lüfters 8 angeordnet.

Somit strömt die vom Lüfter 8 angesaugt Luft in radialer Richtung durch die Ausnehmungen 21 hindurch in das Adaptergehäuseteil 3 hinein, wird dann in axialer Richtung zum Lüfter 8 hingezogen und vom Lüfter 8 in diagonaler Richtung aus dem Lüfter 8 herausgefördert, um danach vom an der Innenwandung des Adaptergehäuseteils 3 ausgeformten Umlenkbereich 12 in axiale Richtung umgelenkt zu werden. In Luftwirbeln des geförderten Luftstroms gegebenenfalls vorhandener Drall wird durch erste und zweite Kühlrippen (13, 20) unterdrückt, da diese Kühlrippen (13, 20) sich in axialer Richtung erstrecken.

Die Rotorwelle 6 und die eintreibende Welle 9 des Getriebes sind im Wesentlichen koaxial zueinander ausgerichtet. Fertigungs- und Montage-bedingte Toleranzen oder Abweichungen gleicht die Kupplung 7 aus. Die durch das Lager 10 definierte Drehachse der Kupplung 7 definiert die axiale Richtung.

Der vom Lüfter 8 in axialer Richtung überdeckte Bereich überlappt zwar mit dem vom Umlenkbereich 12 in axialer Richtung überdeckten Bereich echt, jedoch ist der vom Lüfter 8 überdeckte Radialabstandsbereich radial innerhalb des vom Umlenkbereich 12 überdeckten Radialabstandsbereich angeordnet, insbesondere also radial beabstandet.

Somit ist ein diagonales Einströmen, also ein Einströmen, das mit zunehmendem Radialabstand eine in axialer Richtung zunehmende Axialposition aufweist, insbesondere mit einem Winkel zwischen 10° und 80° zur axialen Richtung, vom Umlenkbereich 12 in axiale Richtung umlenkbar in einen Austrittsbereich. Dabei ist das Adaptergehäuseteil in diesem Austrittsbereich düsenartig geformt, weist also einen Düsenbereich 11 auf, so dass die aus dem Austrittsbereich ausströmende Luft entlang des zylindrisch geformten Gehäusebereichs 1 strömt.

Dabei ist der vom Düsenbereich 11 des Adaptergehäuseteils 3 überdeckte Radialabstandsbereich radial beabstandet vom vom Gehäusebereich 1 überdeckten Radialabstandsbereich. Der Düsenbereich 11 ragt über. Hierzu überlappt der vom Düsenbereich 11 des Adaptergehäuseteils 3 in axialer Richtung überdeckte Bereich mit dem vom Gehäusebereich 1 in axialer Richtung überdeckten Bereich.

Der Düsenbereich 11 ist der vom Elektromotor abgewandte axiale Endbereich des Adaptergehäuseteils 3.

Der Austrittsbereich der Luft ist daher ebenfalls radial außerhalb des Gehäusebereichs 1 angeordnet. Insbesondere ist also der vom Austrittsbereich überdeckte Radialabstandsbereich radial außerhalb, insbesondere also größer, als der vom Gehäusebereich 1 überdeckte Radialabstandsbereich

Auf der vom Adapter und vom Elektromotor axial abgewandten Seite des Getriebes weist das Getriebe einen Flanschblockabtrieb 2 auf, insbesondere also einen aus dem Getriebe axial herausragenden Bereich der abtreibenden Welle des Getriebes auf.

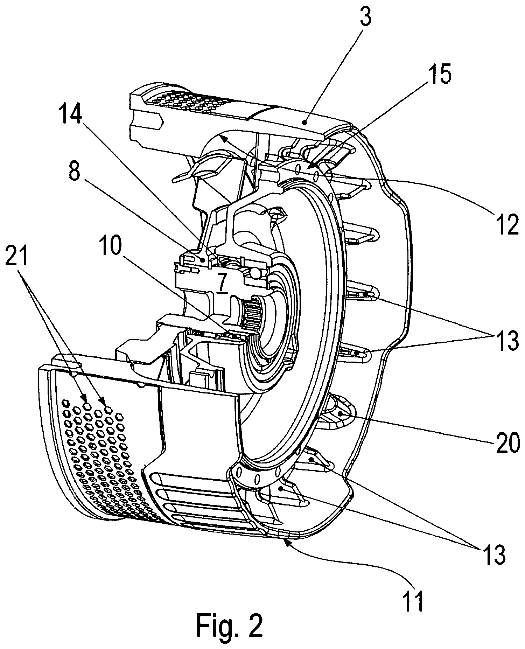

Wie in Figur 2 gezeigt, weist das Adaptergehäuseteil 3 im Wesentlichen eine innere ringartige Struktur auf, die über die ersten und zweiten Kühlrippen (13, 20) mit einer äußeren ringartigen Struktur verbunden ist.

Dabei weist die äußere ringartige Struktur an ihrem dem Motor zugewandten Endbereich die Ausnehmungen 21 als Luftdurchlass auf und an ihrem vom Motor abgewandten Endbereich den Düsenbereich 11.

Die Kühlrippen (13, 20) sind in Umfangsrichtung voneinander insbesondere regelmäßig beabstandet, wobei die ersten Kühlrippen 13 dünnwandiger, insbesondere also in Umfangsrichtung mit einer kleineren Wandstärke, ausgeführt sind als die zweiten Kühlrippen 20.

Die zweiten Kühlrippen 20 sind in Umfangsrichtung voneinander insbesondere regelmäßig beabstandet, wobei aber in Umfangsrichtung zwischen jeweils zwei nächstbenachbarten zweiten Kühlrippen 20 erste Kühlrippen 13 angeordnet sind.

Die radiale Wandstärke des Düsenbereichs 11 nimmt mit zunehmendem Abstand vom Elektromotor ab, insbesondere verjüngt sich also zum vom Motor abgewandten, axialen Ende hin.

Die ersten Kühlrippen 13 fungieren somit besonders als Luftleitmittel zur Unterdrückung von Drall in der Luftströmung und zur Entwärmung. Die zweiten Kühlrippen 20 führen die Haltefunktion zwischen der inneren und der äußeren ringartigen Struktur verstärkt aus.

Die innere Struktur weist einen Flanschbereich für Verbindungsschrauben auf, welche das Getriebe mit dem Adaptergehäuseteil verbinden. Hierzu weist der Flanschberiech ein Bohrbild auf, welches Bohrungen auf jeweils gleichem Radialabstand aufweist, insbesondere welche in Umfangsrichtung voneinander regelmäßig beabstandet sind.

Die innere ringartige Struktur weist eine mittige Ausnehmung auf, in welcher das Lager 10 und axial davon beabstandet der Wellendichtring 14 aufgenommen ist. das Lager 10 ist gegen eine nach radial innen hervorragende Stufe angestellt und mittels eines Sicherungsrings axial gesichert.

Vorzugsweise ist die eintreibende Welle des Getriebes mittels Steckverzahnung in Umfangsrichtung formschlüssig mit der Kupplung 7 verbunden und dabei eingepresst in die Kupplung, also pressverbunden.

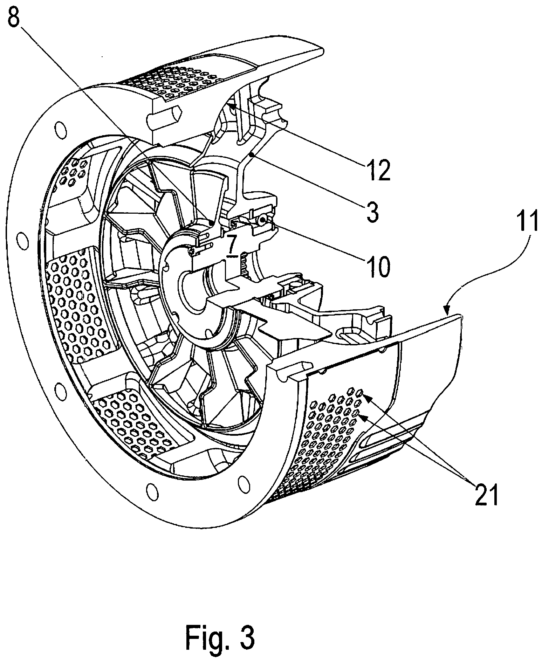

Wie in Figur 3 deutlich erkennbar, strömt die Luft durch die Ausnehmungen 21 radial in das Adaptergehäuseteil 3 ein, wird aber axial vom Lüfter 8 angesaugt und dann radialer aus dem Lüfter herausgefördert.

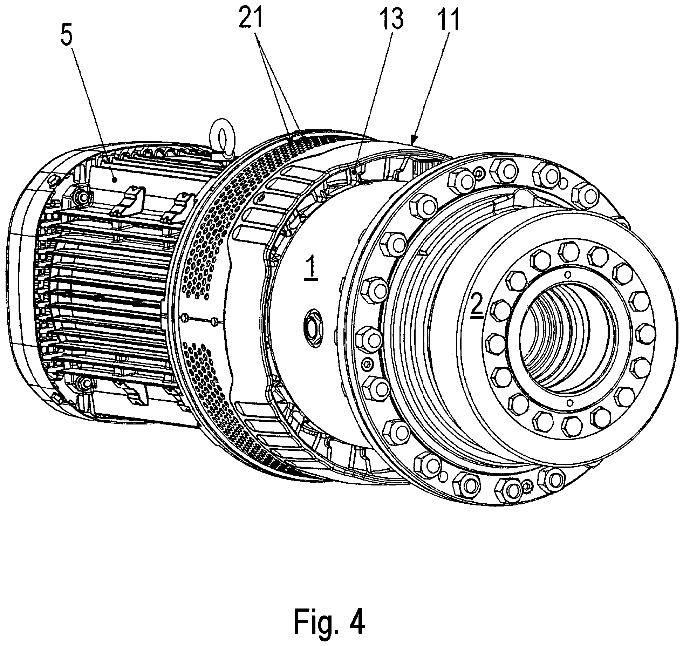

Wie in Figur 4 gezeigt, fungiert der Düsenberiech 11 als Luftleithaubenbereich, da er den austretenden Luftstrom entlang des Gehäusebereichs 1 ausrichtet.

Somit wird einerseits die vom Elektromotor über den Lagerflansch 4 in das Adaptergehäuseteil 3 eingeleitete Wärme mittels des entlang der Kühlrippen (13, 20) strömenden Luftstroms abtransportiert und andererseits auch die vom Getriebe über den Gehäusebereich 1 an den Luftstrom abgegebene Wärme.

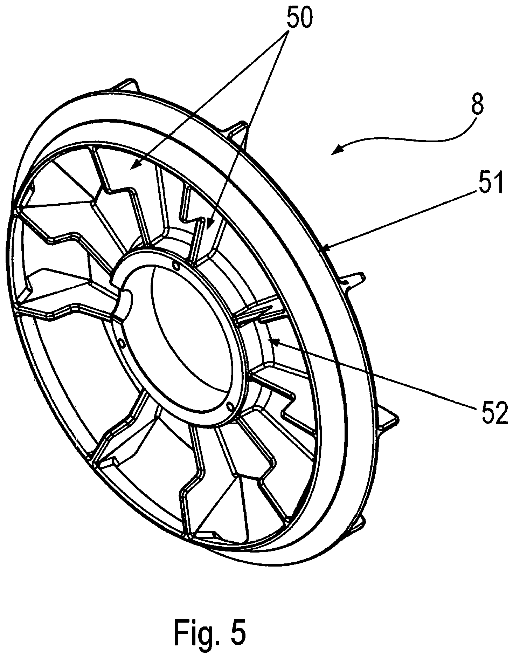

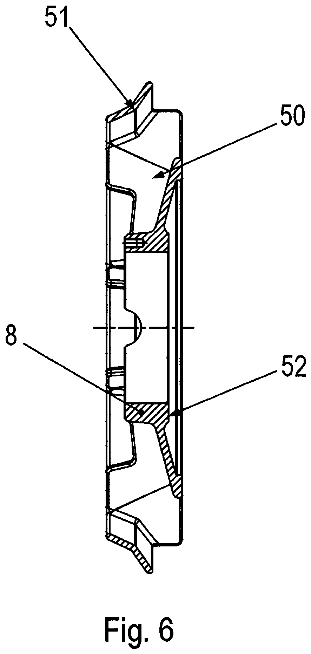

Wie auch in Figur 5 und Figur 6 gezeigt, weist der Lüfter 8 einen Basisring 52 auf, welcher auf die innere ringartige Struktur aufgesteckt und mit ihr drehfest verbunden ist.

Über sich vom Basisring 52 radial erstreckende Lüfterflügel 50 ist ein Luftleitring 51 gehalten.

Somit ist der Luftleitring 51 radial beabstandet vom Basisring 52 und mittels der Lüfterflügel 50 verbunden, die in Umfangsrichtung vorzugsweise unregelmäßig voneinander beabstandet sind.

Die axiale Breite der Lüfterflügel 50 nimmt mit zunehmendem Radialabstand monoton zu, insbesondere stufenartig, bis zum Erreichen des kleinsten Radialabstands des Luftleitrings. Bei weiter zunehmendem Radialabstand nimmt die axiale Breite der Lüfterflügel 50 dann monoton ab.

Durch die stufenartige Zunahme der axialen Breite der Lüfterflügel ist radial innerhalb der Stufe ein Einströmen des Luftstroms verbessert ausführbar, weil ein größerer Freiraum, insbesondere axialer Abstand zum Lagerflansch 4 des Elektromotors, bereitgestellt ist und der geförderte Luftstrom beim radialen Aufsteigen zwischen den Lüfterflügeln 50 dann nicht axial wegströmt infolge der zunehmenden Breite der Lüfterflügel 50.

Der Luftleitring 51 ist derart geformt, dass der radial an ihm anströmende Luftstrom in diagonaler Richtung abgelenkt wird, insbesondere also eine axiale Geschwindigkeitskomponente erhält.

Hierzu wächst der beim Luftleitring bei im Wesentlichen konstanter radialer Wandstärke der jeweils kleinste Radialabstand in axialer Richtung an.

Außerdem überdeckt der Luftleitring 51 in axialer Richtung nur einen Teil des vom Lüfterflügel 50 in axialer Richtung überdeckten Bereichs. Darüber hinaus ist der vom Luftleitring 51 in axialer Richtung überdeckte Bereich im vom Lüfterflügel 50 in axialer Richtung überdeckten Bereich.

Bei weiteren erfindungsgemäßen Ausführungsbeispielen weist das Planetengetriebe eine dritte planetengetriebestufe auf, welche nicht vom zylindrischen Gehäusebereich 1 umgeben ist, sondern von einem weiteren Gehäusebereich, so dass der Übergang vom zylindrischen Gehäusebereich 1 zum weiteren Gehäusebereich gestuft ausgeformt ist.

Die Bezugszeichenliste wird in die Figurenbeschreibung miteinbezogen.

### Bezugszeichenliste

1 Gehäusebereich des Getriebes, insbesondere des Planentengetriebes
2 Flanschblockabtrieb des Getriebes
3 Adaptergehäuseteil
4 Lagerflansch
5 Statorgehäuse
6 Rotorwelle
7 Kupplung
8 Lüfter
9 eintreibende Welle des Getriebes, insbesondere Sonnenradwelle
10 Lager
11 Düsenbereich
12 Umlenkbereich
13 erste Kühlrippe
14 Wellendichtring
15 Flanschbereich
20 zweite Kühlrippe
21 Ausnehmungen
50 Lüfterflügel
51 Luftleitring
52 Basisring

## Patentansprüche

1. Antriebssystem, aufweisend einen Elektromotor, ein Getriebe und einen einen Lüfter (8) aufweisenden Adapter,
wobei der Adapter wiederum ein Adaptergehäuseteil (3) aufweist,
wobei eine Rotorwelle (6) des Elektromotors mit einer im Adapter angeordneten Kupplung (7) verbunden ist, insbesondere eingesteckt ist,
wobei die Kupplung (7) mit einer eintreibenden Welle (9) des Getriebes verbunden ist, insbesondere eingesteckt ist,
wobei der Lüfter (8) mit der Kupplung (7) drehfest verbunden ist, insbesondere auf die Kupplung (7) aufgesteckt ist,
**wobei** das Adaptergehäuseteil (3) einen in axialer Richtung vom Elektromotor abgewandten, als Düsenbereich (11) derartig geformten Endbereich aufweist, wobei der vom Lüfter (8) geförderte Luftstrom in axialer Richtung, insbesondere entlang eines Gehäusebereichs (1) des Getriebes, aus dem Adaptergehäuseteil (3) ausströmt, insbesondere wobei die axiale Richtung parallel zur Richtung der Drehachse der Kupplung (7) ausgerichtet ist,
und wobei **das Adaptergehäuseteil** (3) **eine innere ringartige Struktur und eine äußere ringartige Struktur aufweist,**
**dadurch gekennzeichnet, dass**
die innere ringartige Struktur mit der äußeren ringartigen Struktur über erste und zweite Kühlrippen (13, 20) verbunden ist, welche in Umfangsrichtung voneinander insbesondere regelmäßig beabstandet sind,
wobei die äußere ringartige Struktur den Düsenbereich (11) aufweist.
wobei die innere ringartige Struktur radial innerhalb der äußeren ringartigen Struktur **angeordnet ist,**
**wobei die ersten Kühlrippen (13) jeweils in Umfangsrichtung eine geringere Wandstärke aufweisen als die zweiten Kühlrippen (20),**
**wobei in Umfangsrichtung zwischen zwei jeweils zueinander nächstbenachbarten zweiten Kühlrippen (20) erste Kühlrippen (13) angeordnet** sind und
**wobei die äußere ringartige Struktur radial durchgehende Ausnehmungen (21) als Lufteinlassöffnungen für den vom Lüfter (8) geförderten Luftstrom aufweist.**

2. Antriebssystem nach Anspruch 1,
**dadurch gekennzeichnet, dass**
die Kupplung (7) mittels eines im Adaptergehäuseteil (3) aufgenommenen Lagers (10) drehbar gelagert ist.

3. Antriebssystem nach einem der vorangegangenen Ansprüche,
**dadurch gekennzeichnet, dass**
der Lüfter (8) als Diagonallüfter ausgeführt ist.

4. Antriebssystem nach einem der vorangegangenen Ansprüche,
**dadurch gekennzeichnet, dass**
der Lüfter (8) einen Basisring (52) aufweist, welcher mittels, in Umfangsrichtung voneinander insbesondere regelmäßig beabstandeten Lüfterflügeln (50) mit einem radial vom Basisring (52) beabstandeten Luftleitring (51) verbunden ist.

5. Antriebssystem nach Anspruch 4,
**dadurch gekennzeichnet, dass**
die Lüfterflügel (50) sich jeweils radial erstrecken,
insbesondere wobei der vom jeweiligen Lüfterflügel (50) in Umfangsrichtung überdeckte Bereich unabhängig vom Radialabstand ist.

6. Antriebssystem **nach einem der Ansprüche 4 oder 5,**
**dadurch gekennzeichnet, dass**
der minimale Radialabstand des Luftleitrings (51) in axialer Richtung monoton zunimmt.

7. Antriebssystem nach einem der vorangegangenen Ansprüche,
**dadurch gekennzeichnet, dass**
die innere ringartige Struktur ein Lager (10) aufnimmt, welches die Kupplung (7) drehbar lagert,
insbesondere wobei die innere ringartige Struktur einen Wellendichtring (14) aufnimmt, dessen Dichtlippe auf der Kupplung (7) läuft.

8. Antriebssystem nach einem der vorangegangenen Ansprüche,
**dadurch gekennzeichnet, dass**
das Adaptergehäuseteil (3), insbesondere der Düsenbereich (11) des Adaptergehäuseteils (3), den Gehäusebereich (1) des Getriebes überragt,
wobei die Oberfläche des Gehäusebereichs (1) eine Zylindermantelfläche ist.

9. Antriebssystem nach einem der vorangegangenen Ansprüche,
**dadurch gekennzeichnet, dass**
der vom Adaptergehäuseteil (3), insbesondere Düsenbereich (11) des Adaptergehäuseteils (3), in axialer Richtung überdeckte Bereich mit dem vom Gehäusebereich (1) in axialer Richtung überdeckten Bereich überlappt.

10. Antriebssystem nach einem der vorangegangenen Ansprüche,
**dadurch gekennzeichnet, dass**
der Gehäusebereich (1) eine oder zumindest zwei Planetengetriebestufen des Getriebes radial umgibt.

11. Antriebssystem nach einem der vorangegangenen Ansprüche,
**dadurch gekennzeichnet, dass**
der vom Adaptergehäuseteil (3) überdeckte Radialabstandsbereich mit dem vom Gehäusebereich (1) überdeckten Radialabstandsbereich überlappt,
insbesondere der vom Düsenbereich (11) des Adaptergehäuseteils (3) überdeckte Radialabstandsbereich radial beabstandet ist, insbesondere radial außerhalb ist, von dem vom Gehäusebereich (1) überdeckten Radialabstandsbereich.

12. **Antriebssystem nach Anspruch 5,**
**dadurch gekennzeichnet, dass**
die axiale Breite des jeweiligen Lüfterflügels (50) mit zunehmendem Radialabstand monoton zunimmt, insbesondere eine stufenartige Zunahme aufweist.

## Claims

1. A drive system, having an electric motor, a gear unit and an adapter having a fan (8),
wherein the adapter in turn has an adapter housing part (3),
wherein a rotor shaft (6) of the electric motor is connected to, in particular is inserted in, a coupling (7) arranged in the adapter,
wherein the coupling (7) is connected to, in particular is inserted in, an input shaft (9) of the gear unit,
wherein the fan (8) is connected non-rotatably to the coupling (7), in particular is mounted on the coupling (7),
wherein the adapter housing part (3) has an end region which faces away from the electric motor in the axial direction and is formed as a nozzle region (11) such, wherein the air flow conveyed by the fan (8) flows out of the adapter housing part (3) in the axial direction, in particular along a housing region (1) of the gear unit,
in particular wherein the axial direction is oriented parallel to the direction of the axis of rotation of the coupling (7),
and wherein
the adapter housing part (3) has an inner ring-like structure and an outer ring-like structure,
**characterised in that**
the inner ring-like structure is connected to the outer ring-like structure via first and second cooling fins (13, 20) which are in particular regularly spaced apart from each other in the circumferential direction,
with the outer ring-like structure bearing the nozzle region (11),
with the inner ring-like structure being arranged radially within the outer ring-like structure,
with the first cooling fins (13) in each case having a lesser wall thickness in the circumferential direction than the second cooling fins (20),
with first cooling fins (13) being arranged in the circumferential direction between two second cooling fins (20) which are in each case next adjacent to each other, and
with the outer ring-like structure having radially continuous cutouts (21) as air inlet openings for the air flow conveyed by the fan (8).

2. A drive system according to claim 1,
**characterised in that**
the coupling (7) is rotatably mounted by means of a bearing (10) received in the adapter housing part (3).

3. A drive system according to one of the preceding claims,
**characterised in that**
the fan (8) is embodied as a diagonal fan.

4. A drive system according to one of the preceding claims,
**characterised in that**
the fan (8) has a base ring (52) which, by means of fan blades (50) in particular regularly spaced apart from each other in the circumferential direction, is connected to an air guide ring (51) spaced apart radially from the base ring (52).

5. A drive system according to claim 4,
**characterised in that**
the fan blades (50) extend radially in each case,
in particular with the region covered in the circumferential direction by the respective fan blade (50) being independent of the radial distance.

6. A drive system according to one of claims 4 or 5,
**characterised in that**
the minimum radial distance of the air guide ring (51) increases monotonically in the axial direction.

7. A drive system according to one of the preceding claims,
**characterised in that**
the inner ring-like structure receives a bearing (10) which rotatably mounts the coupling (7),
in particular with the inner ring-like structure receiving a shaft sealing ring (14), the sealing lip of which runs on the coupling (7).

8. A drive system according to one of the preceding claims,
**characterised in that**
the adapter housing part (3), in particular the nozzle region (11) of the adapter housing part (3), projects over the housing region (1) of the gear unit,
the surface of the housing region (1) being a lateral cylinder surface.

9. A drive system according to one of the preceding claims,
**characterised in that**
the region covered in the axial direction by the adapter housing part (3), in particular nozzle region (11) of the adapter housing part (3), overlaps with the region covered by the housing region (1) in the axial direction.

10. A drive system according to one of the preceding claims,
**characterised in that**
the housing region (1) radially surrounds one or at least two planetary gear stages of the gear unit.

11. A drive system according to one of the preceding claims,
**characterised in that**
the radial distance region covered by the adapter housing part (3) overlaps with the radial distance region covered by the housing region (1),
in particular the radial distance region covered by the nozzle region (11) of the adapter housing part (3) is radially spaced apart from, in particular radially outside, the radial distance region covered by the housing region (1).

12. A drive system according to claim 5,
**characterised in that**
the axial width of the respective fan blade (50) increases monotonically with increasing radial distance, in particular exhibits a step-like increase.

## Revendications

1. Système d'entraînement, comprenant un moteur électrique, une transmission et un adaptateur comprenant un ventilateur (8),
l'adaptateur présentant à son tour une partie carter d'adaptateur (3),
un arbre de rotor (6) du moteur électrique étant relié, en particulier par emmanchement, à un embrayage (7) agencé dans l'adaptateur,
l'embrayage (7) étant relié, en particulier par emmanchement, à un arbre d'entraînement (9) de la transmission,
le ventilateur (8) étant relié de manière solidaire en rotation à l'embrayage (7), en particulier étant emmanché sur l'embrayage (7),
la partie carter d'adaptateur (3) présentant une région d'extrémité opposée au moteur électrique dans la direction axiale et formée de manière à faire office de région de buse (11), le flux d'air refoulé par le ventilateur (8) s'écoulant à partir de la partie carter d'adaptateur (3) dans la direction axiale, en particulier le long d'une région de carter (1) de la transmission,
la direction axiale étant en particulier orientée parallèlement à la direction de l'axe de rotation de l'embrayage (7),
et la partie carter d'adaptateur (3) présentant une structure annulaire intérieure et une structure annulaire extérieure,
**caractérisé en ce que**
la structure annulaire intérieure est reliée à la structure annulaire extérieure par des premières et secondes nervures de refroidissement (13, 20) espacées les unes des autres, en particulier de manière régulière, dans la direction circonférentielle,
la structure annulaire extérieure comprenant la région de buse (11),
la structure annulaire intérieure étant agencée radialement à l'intérieur de la structure annulaire extérieure,
les premières nervures de refroidissement (13) présentant respectivement une épaisseur de paroi inférieure à celle des secondes nervures de refroidissement (20) dans la direction circonférentielle,
les premières nervures de refroidissement (13) étant agencées dans la direction circonférentielle entre deux secondes nervures de refroidissement (20) respectivement les plus proches l'une de l'autre et
la structure annulaire extérieure présentant des évidements (21) radialement traversants faisant office d'orifices d'entrée d'air pour le flux d'air refoulé par le ventilateur (8).

2. Système d'entraînement selon la revendication 1,
**caractérisé en ce que**
l'embrayage (7) est monté rotatif au moyen d'un palier (10) logé dans la partie carter d'adaptateur (3).

3. Système d'entraînement selon l'une quelconque des revendications précédentes, **caractérisé en ce que**
le ventilateur (8) est réalisé sous la forme d'un ventilateur à flux diagonal.

4. Système d'entraînement selon l'une quelconque des revendications précédentes, **caractérisé en ce que**
le ventilateur (8) présente un anneau de base (52) qui est relié à un anneau de guidage d'air (51) espacé radialement par rapport à l'anneau de base (52) au moyen de pales de ventilateur (50), espacées les unes des autres, en particulier de manière régulière, dans la direction circonférentielle.

5. Système d'entraînement selon la revendication 4,
**caractérisé en ce que**
les pales de ventilateur (50) s'étendent respectivement de manière radiale,
la région couverte par la pale de ventilateur (50) respective dans la direction circonférentielle étant en particulier indépendante de l'espacement radial.

6. Système d'entraînement selon l'une quelconque des revendications 4 ou 5, **caractérisé en ce que**
l'espacement radial minimal de l'anneau de guidage d'air (51) augmente de manière monotone dans la direction axiale.

7. Système d'entraînement selon l'une quelconque des revendications précédentes, **caractérisé en ce que**
la structure annulaire intérieure accueille un palier (10) qui supporte l'embrayage (7) de manière rotative,
la structure annulaire intérieure accueillant en particulier une bague d'étanchéité d'arbre (14) dont la lèvre d'étanchéité s'étend sur l'embrayage (7).

8. Système d'entraînement selon l'une quelconque des revendications précédentes, **caractérisé en ce que**
la partie carter d'adaptateur (3), en particulier la région de buse (11) de la partie carter d'adaptateur (3), dépasse de la région de carter (1) de la transmission,
la surface de la région de carter (1) étant une surface d'enveloppe cylindrique.

9. Système d'entraînement selon l'une quelconque des revendications précédentes, **caractérisé en ce que**
la région couverte par la partie carter d'adaptateur (3), en particulier la région de buse (11) de la partie carter d'adaptateur (3), dans la direction axiale chevauche la région couverte par la région de carter (1) dans la direction axiale.

10. Système d'entraînement selon l'une quelconque des revendications précédentes, **caractérisé en ce que**
la région de carter (1) entoure radialement un ou au moins deux étage(s) d'engrenage planétaire de la transmission.

11. Système d'entraînement selon l'une quelconque des revendications précédentes, **caractérisé en ce que**
la région d'espacement radial couverte par la partie carter d'adaptateur (3) chevauche la région d'espacement radial couverte par la région de carter (1),
la région d'espacement radial couverte par la région de buse (11) de la partie carter d'adaptateur (3) étant en particulier espacée radialement, en particulier se trouve à l'extérieur radialement, par rapport à la région d'espacement radial couverte par la région de carter (1).

12. Système d'entraînement selon la revendication 5,
**caractérisé en ce que**
la largeur axiale de la pale de ventilateur (50) respective augmente de manière monotone, en particulier présente une augmentation progressive, avec l'augmentation de l'espacement radial.
